Europäisches Patentamt

European Patent Office

Office européen des brevets

(19)

(11) **EP 1 447 167 A1**

(12) **EUROPÄISCHE PATENTANMELDUNG**

(43) Veröffentlichungstag:
**18.08.2004 Patentblatt 2004/34**

(51) Int Cl.$^7$: **B23K 20/12**, B29C 65/06

(21) Anmeldenummer: **04003202.1**

(22) Anmeldetag: **12.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **14.02.2003 DE 10306283**

(71) Anmelder: **Rossner, Volker**
**95119 Naila-Marxgrün (DE)**

(72) Erfinder: **Rossner, Volker**
**95119 Naila-Marxgrün (DE)**

(74) Vertreter: **Neugebauer, Jürgen, Dipl.Phys. et al**
**Schroeter Lehmann Fischer & Neugebauer**
**Wolfratshauser Strasse 145**
**81479 München (DE)**

(54) **Verfahren und Vorrichtung zum Reibschweissen von Fügeflächen zweier Formteile**

(57)    Die Erfindung betrifft ein Verfahren zum Reibschweißen von zwei an einer Fügeebene zusammenstoßenden Profilendquerschnitten (Fügeflächen) von Formteilen, wie insbesondere Profilrahmenabschnitten (70,70').

Die Profilrahmenabschnitte (70,70') sollen im verschweißten Zustand offene oder geschlossene Profilrahmen bilden, wobei während einer zur Erwärmung an einer Fügeebene aneinanderstoßenden Fügeflächen benachbarter Profilrahmenabschnitte (70,70') dienenden Zeitdauer die Fügeflächen aneinander reiben. Nach Verstreichen einer für eine Verschweißung der Materialien an den Fügeflächen ausreichenden Erwärmungszeit, werden die an der Fügeebene aneinanderstoßenden Fügeflächen benachbarter Profilrahmenabschnitte (70,70') während einer der Reibschweißphase folgenden Abklingphase mit paßformgenau ausgerichtet und dann miteinander koordiniert zum Stillstand gebracht. Dadurch ergibt sich ein besonders inniger Reibschweißverbund.

Bei der Anwendung auf einen einen geschlossen Rahmen bildenden Zug von Profilrahmenabschnitten (70,70') werden die an den Fügeebenen im Gehrungsschnittbereich aneinanderstoßenden Fügeflächen der einzelnen Profilrahmenabschnitte (70,70') während einer Zirkularreibschweißphase jeweils gegenphasig zu Schwingungen angeregt, und während der Abklingphase werden die an den Fügeebenen im Gehrungsschnittbereich aneinanderstoßenden Fügeflächen der einzelnen Profilrahmenabschnitte (70,70') jeweils gleichphasig angeregt und so koordiniert in den Ruhezustand abgebremst.

Fig. 12a

(Forts. nächste Seite)

0° 180° 70 180° 0° 70° 180° 0° 180° 0°

Gleichphasigkeit der Reibschweißköpfe während der Abklingphase, dadurch keine Relativbewegung zwischen den Reibflächen

Fig. 12b

**Beschreibung**

Die vorliegende Erfindung bezieht sich auf ein Reibschweißverfahren nach dem Oberbegriff des Anspruchs 1 sowie eine Vorrichtung zur Durchführung dieses Verfahrens.

Reibschweißverfahren nach dem Oberbegriff des Anspruchs 1 sind z.B. aus DE 199 38 099 A1 sowie DE 199 3 8 100 A1 bekannt.

DE 199 38 099 A1 beschäftigt sich mit Linearreibschweißen von Formteilen in der Gestalt von Profilrahmenabschnitten, wie sie z.B. als extrudierte Kunststoffprofilabschnitte im Fensterbau Verwendung finden. Dabei stoßen die Profilendquerschnitte (Fügeflächen) zweier durch Reibung miteinander zu verschweißender Profilrahmenabschnitte an einer Fügeebene aneinander. Die aneinanderstoßenden Profilendquerschnitte führen dabei relativ zueinander eine Linearbewegung aus. Dies kann einerseits dadurch erfolgen, daß ein Profilendquerschnitt relativ zur Fügeebene eine Linearbewegung ausführt, während der andere Profilendquerschnitt relativ zur Fügeebene ruhiggestellt wird. Andererseits kann dies dadurch erfolgen, daß beide Profilendquerschnitte relativ zur Fügeebene und dabei auch relativ zueinander eine Linearbewegung ausführen.

DE 199 38 100 A1 beschäftigt sich mit sogenanntem Orbitalschweißen sowie Zirkularreibschweißen von Formteilen in der Gestalt von Profilrahmenabschnitten, wie sie z.B. als extrudierte Kunststoffprofilabschnitte im Fensterbau Verwendung finden. Hierbei stoßen die Profilendquerschnitte (Fügeflächen) zweier durch Reibung miteinander zu verschweißender Profilrahmenabschnitte ebenfalls an einer Fügeebene reibend aneinander und führen relativ zur Fügeebene jeweils phasenverschoben eine ellipsenförmige oder kreisförmige Bewegung aus.

In beiden bekannten Fällen sind zur Ausführung dieser Relativbewegungen zwischen den in der Fügeebene aneinanderstoßenden Profilendquerschnitten Reibschweißköpfe vorgesehen, wie sie in DE 44 36 857 A1 offenbart sind. Es ist dabei jeweils ein solcher Reibschweißkopf im Bereich der Fügeebene für je einen der dort aneinandertreffenden Profilrahmenabschnitte vorgesehen, also insgesamt zwei Reibschweißköpfe pro Fügeebene. Die Verwendung solcher Reibschweißköpfe ermöglicht es, bei den beiderseits der Fügeebene beaufschlagten Schwingungen zuverlässig eine Phasenverschiebung von 180° einzustellen. Die in DE 44 36 857 A1 offenbarte Exzenterlagerung einer Reibschweißkopfes ermöglicht weiterhin ein ruckartiges Ausklinken zwischen einer Antriebswelle und dem von ihr angetriebenen Reibschweißkopf und damit eine ruckartige Unterbrechung der Zuführung von Schwingungsenergie in die miteinander zu verschweißenden Fügeflächen.

In DE 199 38 099 A1 und DE 199 38 100 A1 ist weiterhin offenbart, wie mehrere Profilrahmenabschnitte in einem in einer Rahmenbezugsebene liegenden geschlossenen Zug mehrerer aneinanderstoßender Profilrahmenabschnitte gleichzeitig zu einem in sich geschlossenen Rahmen verschweißt werden können. Dabei treten längs des Umfangs eines solchen geschlossenen Rahmens mehrere Fügeebenen auf, und zwar jeweils dort, wo die Enden zweier einzelner Profilrahmenabschnitte aneinanderstoßen.

Z.B. sind bei einem rechteckförmigen Fensterrahmen vier Profilrahmenabschnitte vorgesehen, die in den Ecken eines Rechtecks unter einem Gehrungsschnitt von üblicherweise je 45° an insgesamt vier Fügeebenen aneinanderstoßen. Zu beiden Seiten je einer Fügeebene ist dabei jeweils ein Reibschweißkopf vorgesehen, welcher auf je ein Ende eines an der betreffenden Fügeebene von links oder rechts anliegenden Profilrahmenabschnitts einwirkt. Durch Wahl der Anregungsamplituden und Anregungsphasen zweier an einer Fügeebene zusammenwirkender Reibschweißköpfe läßt sich die Relativbewegung zwischen den an dieser Fügeebene zusammenstoßenden Profilendquerschnitten (Fügeflächen) kontrollieren. Um den aus vier Profilrahmenabschnitten bestehenden Gesamtrahmen insgesamt kräfte- und drehmomentenfrei zu halten, und dadurch eine translatorische oder rotatorische Gesamtbewegung des Gesamtrahmens beim Reibschweißvorgang zu verhindern, schlagen DE 199 38 099 A1 und DE 199 38 100 A1 Konzepte vor, bei der nicht nur die Bewegungen zweier an einer Fügeebene von links und rechts einwirkender Reibschweißköpfe synchronisiert sind, sondern darüber hinaus während des Reibschweißvorgangs auch die Amplituden und Phasenlagen der vier jeweils an den Ecken eines Gesamtrahmens einwirkenden Paare von je zwei Reibschweißköpfen paarweise so aufeinander abgestimmt sind, daß sich die von allen acht Reibschweißköpfen ausgeübten Kräfte und Drehmomente während des Reibschweißvorgangs kompensieren.

Werden, wie beim Stand der Technik vorgesehen, die Antriebswellen der Reibschweißköpfe nach Ablauf der Reibschweißphase ruckartig ausgekoppelt, so kommt es aufgrund der während der Reibschweißphase auftretenden hohen Drehzahlen der Antriebsmotoren von typischerweise mehreren tausend Umdrehungen pro Minute zu einem beachtlichen Nachschwingen der vor der ruckartigen Auskopplung mit diesen Drehzahlen in Schwingungen versetzten Fügeflächen. Während dieser Nachschwingphase findet aufgrund von Materialinhomogenitäten in den beiden an der Fügeebene aneinanderstoßenden Fügeflächen jeweils ein unkontrollierter Abbremsvorgang von Massenpunkten statt. Die Massenpunkte in den beiden Fügeflächen "trudeln" dann jeweils unkoordiniert und unsynchronisiert voneinander in ihren letztendlichen Ruhezustand, der beim Aushärten der erwärmten plastischen Materialien erreicht wird.

Dies führt während der Nachschwingphasen der jeweiligen Fügeflächen zu einem unkontrollierten Fluß des noch warmen, fließfähigen Materials in der Fügeebene.

Es zeigt sich in der Praxis, daß dies dazu führt, daß die Paßgenauigkeit und die Festigkeit der Reibschweißverbindungen zwischen den an der Fügeebene aneinanderstoßenden Profilrahmenabschnitten nur suboptimal ausgebildet werden. In der Serienfertigung von Formteilen mit Reibschweißfügeflächen können zudem von Bauteil zu Bauteil erhebliche Qualitätsschwankungen hinsichtlich der Fügefestigkeit und Paßgenauigkeit der miteinander verschweißten Profilendquerschnittsflächen auftreten.

Eine Aufgabe der vorliegenden Erfindung ist es deshalb, Maßnahmen bereitzustellen, mit denen Reibschweißverbindungen an miteinander zu verschweißenden Formteilen erzielt werden, die gegenüber den nach den aus dem Stand der Technik bekannten Verfahren erzielbaren Reibschweißverbindungen eine erhöhte Fügefestigkeit und Paßgenauigkeit erzielen, und für die Serienfertigung eine möglichst gleichmäßige Qualität der Fügefestigkeit und Paßgenauigkeit der verschweißten Fügeflächen von Bauteil zu Bauteil gewährleisten.

Diese Aufgabe wird durch ein Verfahren nach dem unabhängigen Anspruch 1 gelöst.

Eine weitere Aufgabe der vorliegenden Erfmdung ist es, eine Vorrichtung zur praktischen Durchführung eines erfindungsgemäßen Verfahrens bereitzustellen.

Diese Aufgabe wird durch eine Vorrichtung nach Anspruch 5 gelöst.

Die abhängigen Ansprüche betreffen jeweils vorteilhafte Ausführungsformen der Erfindung.

Inbesondere betrifft Anspruch 4 die gleichzeitige Anwendung des erfindungsgemäßen Verfahrens nach Anspruch 1 an mehreren Fügeflächen eines aus einzelnen Profilrahmenabschnitten zusammenzuschweißenden Rahmens.

Die Vorteile und Merkmale der Erfmdung ergeben sich auch aus der nachfolgenden Beschreibung von Ausführungsbeispielen in Verbindung mit den Ansprüchen und der Zeichnung.

Es zeigen:

Fig. 1      eine perspektivische Ansicht einer Vorrichtung zum Betreiben eines erfindungsgemäßen Reibschweißverfahrens mit vier Reibschweißvorrichtungen zum Verschweißen eines geschlossenen Fensterrahmenprofils, wobei dessen Ekken schematisch angedeutet sind;

Fig. 2      eine Draufsicht auf die in Fig. 1 gezeigte Vorrichtung samt schematisch angedeuteten Ecken des herzustellenden Fensterrahmenprofils;

Fig. 3      eine der Fig. 2 entsprechende Ansicht, wobei jedoch die vier Reibschweißvorrichtungen so aufeinander hin bewegt worden sind, daß die dazwischen eingespannten vier Profilabschnitte zur Durchführung eines Reibschweißvorgangs längs Fügeebenen aneinanderstoßen;

Fig. 4      eine perspektivische Ansicht einer einzelnen Reibschweißvorrichtung, wie sie in Fig. 1 bis 3 gezeigt ist; wobei eine Fügeebene E eingezeichnet ist;

Fig. 5 a) und b)      eine Draufsicht auf die in Fig. 4 gezeigte Fügeebene E mit Blickrichtung in Richtung dieser Ebene E;

Fig. 6 a) und b)      zwei ellipsenförmige Bahnkurven für die Projektionen zueinander korrespondierender Punkte auf den Fügeflächen von miteinander zu verbindenden Profilrahmenabschnitten während der Reibschweißphase;

Fig. 6c) und d)      die den Fig. 6a) und b) entsprechenden ellipsenförmigen Bahnkurven während der Abklingphase;

Fig. 7a) und b)      zwei kreisförmige Bahnkurven für die Projektionen zueinander korrespondierender Punkte auf den Fügeflächen von miteinander zu verbindenden Profilrahmenabschnitten;

Fig. 7c) und d)      die den Fig. 7a) und b) entsprechenden kreisförmigen Bahnkurven während der Abklingphase;

Fig. 8a) und b)      zwei geradlinige Bahnkurven für die Projektionen zueinander korrespondierender Punkte auf den Fügeflächen von miteinander zu verbindenden Profilrahmenabschnitten;

Fig. 8c) und d)      die den Fig. 8a) und b) entsprechenden geradlinigen Bahnkurven während der Abklingphase;

Fig. 9      eine schematische perspektivische Schnittdarstellung einer Antriebseinheit mit Exzenterantriebswelle in einer erfindungsgemäßen Vorrichtung zur Durchführung eines Zirkularreibschweißverfahrens;

| Fig. 10a) und 10b) | eine schematische Darstellung der relativen Phasenlage zweier Exzenterantriebswellen, wie sie in der in Fig. 9 gezeigten Antriebseinheit vorliegen, und zwar zunächst in der Reibschweißphase (Phasenversatz $\varphi \neq 0$) und dann in der erfindungsgemäß anschließenden Abklingphase (Phasenversatz $\varphi = 0$); |
|---|---|
| Fig 11a) bis 1) | schematische Draufsichten auf die Positionierung zweier Reibschweißplatten, die von den in Fig. 10 gezeigten Exzenterwellen in einer erfindungsgemäßen Vorrichtung in einem erfindungsgemäßen Reibschweißverfahren angetrieben werden; |
| Fig. 12a) und 12b) | eine Gegenüberstellung der an den Fügeebenen eines zu verschweißenden Profilrahmenzugs während der Reibschweißpahse und während der Abklingphase gewählten Bahnkurvenmuster der Zirkularschwingungsbewegungen der Reibschweißköpfe in einer erfindungsgemäßen Vorrichtung; und |
| Fig. 13) und 13b) | zwei Momentaufnahmen eines komplexes Schwingungsmuster eines aus vier miteinander zu verschweißenden Profilrahmenabschnitten bestehenden rechteckförmigen Rahmens während der kontrollierten Abklingphase gemäß einem erfindungsgemäßen Reibschweißverfahren. |

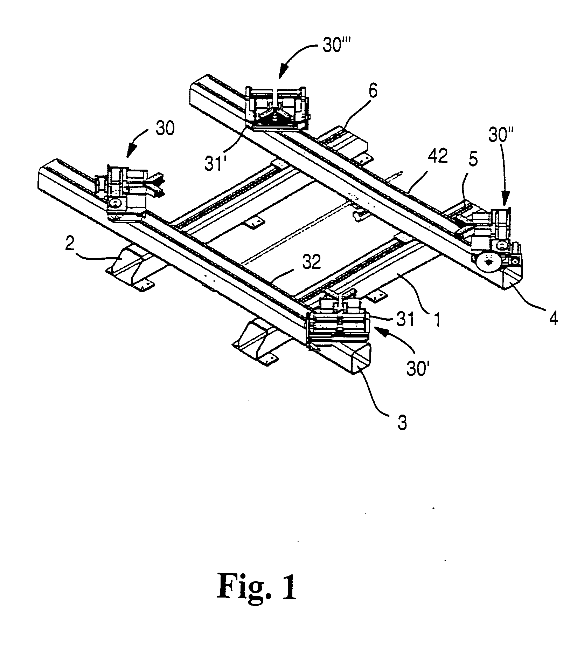

Fig. 1 zeigt in perspektivischer Ansicht eine schematische Darstellung einer beispielhaften Ausführungsform der aus dem Stand der Technik bekannten Reibschweißvorrichtungen.

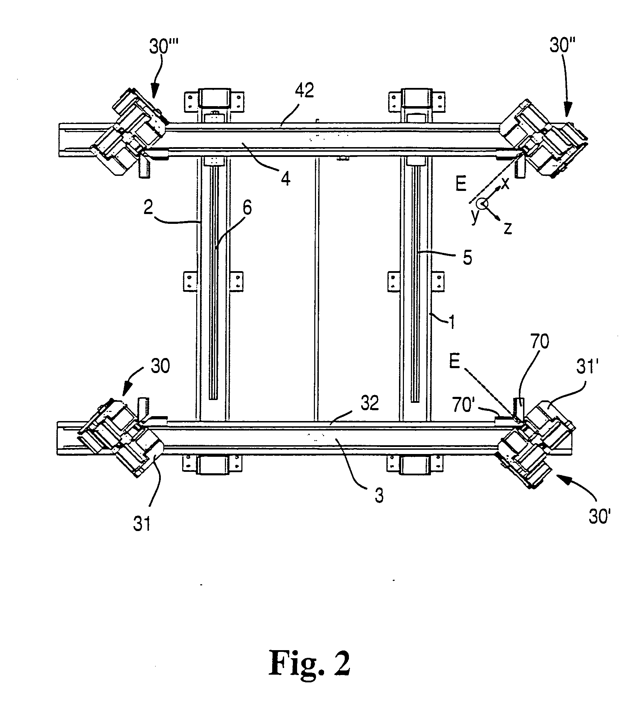

Fig. 2 zeigt eine Draufsicht auf die in Fig. 1 gezeigte Vorrichtung.

Dabei ist auf einem Paar parallel zueinander und ortsfest angeordneter unterer Führungsschienen 1, 2 ein Paar oberer Führungsschienen 3, 4 angebracht. Die oberen Führungsschienen 3, 4 verlaufen parallel zueinander und sind senkrecht gekreuzt zu den unteren Führungsschienen 1, 2 angebracht. In Fig. 2 ist die erste obere Führungsschiene 3 ortsfest auf den unteren Führungsschienen 1, 2 gelagert, die zweite obere Führungsschiene 4 ist längs auf der Oberseite der unteren Führungsschienen 1, 2 angebrachten Führungsstegen 5, 6 verschiebbar gelagert. Durch Verschieben der zweiten oberen Führungsschiene 4 kann der Abstand zwischen den oberen Führungsschienen 3, 4 in Längsrichtung der unteren Führungsschienen vergrößert oder verkleinert werden.

Auf den oberen Führungsschienen 3, 4 sind jeweils zwei Reibschweißeinheiten 30, 30' bzw 30", 30''' angebracht. Diese Reibschweißeinheiten sind auf den oberen Führungsschienen längs deren Längsachsen verschiebbar gelagert. Dies kann beispielhaft dadurch erzielt werden, daß die Reibschweißeinheiten jeweils auf einer Basisplatte 31, 31', 31", 31''' gelagert sind, die ihrerseits längs an der Oberseite der oberen Führungsschienen 3, 4 angebrachten Führungsstegen 32, 42 in Längsrichtung der oberen Führungsschienen 3, 4 verschiebbar sind.

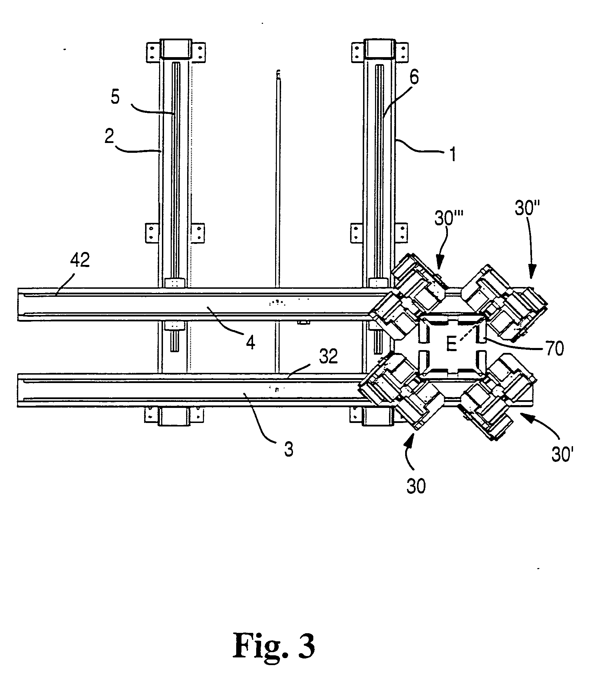

Wie aus dem Vergleich von Fig. 2 und Fig. 3 entnehmbar, können durch Verschieben der zweiten oberen Führungsschiene 4 relativ zu den unteren Führungsschienen 1, 2 sowie durch Verschieben der Basisplatten 31, 31', 31", 31''' auf den oberen Führungsschienen die Abstände zwischen den vier Reibschweißeinheiten 30, 30', 30", 30''' variiert werden. Dadurch können zwischen den Reibschweißeinheiten zu verschweißende Formteile wie insbesondere Rahmenprofilabschnitte 70, 70' unterschiedlicher Länge eingespannt werden. An sich können die Formteile aber beliebig ausgeformt sein.

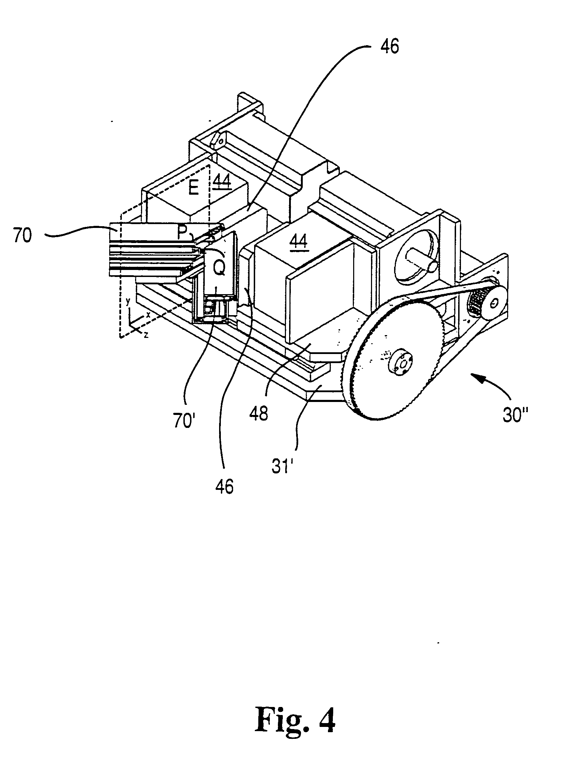

Fig. 4 zeigt beispielhaft die Reibschweißvorrichtung 30" aus Fig. 1 bis 3 in einer perspektivischen Ausschnittsvergrößerung. In dieser Reibschweißvorrichtung stoßen die jeweils mit einem unter 45° relativ zu der oberen Führungsschiene 4 (Fig. 3) verlaufenden Gehrungsschnitt versehenen Enden zweier zu verschweißender Profilrahmenabschnitte 70, 70' zusammen. Durch den Verlauf des Gehrungsschnitts wird eine Fügeebene E zwischen den beiden Profilrahmenabschnitten 70, 70' definiert. In Fig. 4 ist in diese Fügeebene E ein rechtwinkliges Koordinatensystem xyz eingeführt. Dabei verlaufen die x-Achse sowie die y-Achse in der Fügeebene E, die z-Achse steht senkrecht zur Fügeebene und horizontal im Raum, d.h sie verläuft parallel zu einer Rahmenbezugsebene, welche durch die Führungsschienen 1, 2, 3, 4 definiert ist, bzw. durch die ausgelegten planen Profilrahmenabschnitte 70, 70'.

Jede Reibschweißvorrichtung (z.B. 30 ) umfaßt zwei Reibschweißköpfe 44, die relativ zur Fügeebene E symmetrisch angebracht sind. Die Reibschweißköpfe 44 sind jeweils auf beweglichen Basisplatten 48 gelagert. Die Basisplatten 48 können mitsamt den darauf befindlichen Reibschweißköpfen 44 in z-Richtung (senkrecht zur Fügeebene E) aufeinander zu und voneinander weg bewegt werden. Dadurch können Profilabschnittrahmen unterschiedlicher Abmessungen in dem durch die Verschiebung der Basisplatten 48 variablen Spalt zwischen den Reibschweißköpfen 44 eingeschlossen werden, so daß je eine Reibschweißplatte 46 an der Außenseite eines Profilrahmenanschnitts angelegt werden kann.

Jede Reibschweißplatte 46 wird durch eine Antriebseinheit (in Fig. 4 nicht gezeigt) im zugeordneten Reibschweißkopf 44 in Schwingungen versetzt, die jeweils auf den anliegenden Profilrahmenabschnitt übertragen werden.

Um eine Verschweißung zwischen den an der Fügeebene E aneinanderstoßenden Profilendquerschnittsflächen (Fügeflächen) der Profilrahmenabschnitte 70, 70' zu erzielen, ist eine Relativbewegung der Fügeflächen zueinander notwendig. Dadurch gleiten die Fügeflächen der aneinanderstoßenden Profilrahmenabschnitte in der Fügeebene reibend aufeinander ab. Durch diese Reibung kommt es an den Profilendquerschnittsflächen zu einem lokalen Aufschmelzen des Profilmaterials und zu einer Schmelzverbindung zwischen den beiden aneinanderstoßenden Profilrahmenabschnitten.

Um eine Paßgenauigkeit an den Übergängen zwischen den in der Fügungsebene E aneinanderstoßenden Fügeflächen zu erzielen, muß z.B. bei der in Fig. 4 beispielhaft gezeigten Anordnung der (Massen)-Punkt Q auf dem Profilrahmenabschnitt 70' mit dem korrespondierenden (Massen)-Punkt P auf dem Profilrahmenabschnitt 70 beim Reibschweißvorgang möglichst paßgenau zur Deckung gebracht werden. "Korrespondierend" bedeutet dabei, daß diese Massenpunkte im Endzustand nach Abschluß des Reibschweißverfahrens und nach Erkaltung des Materials der miteinander zu verschweißenden Formteile paßgenau aufeinander liegen sollen.

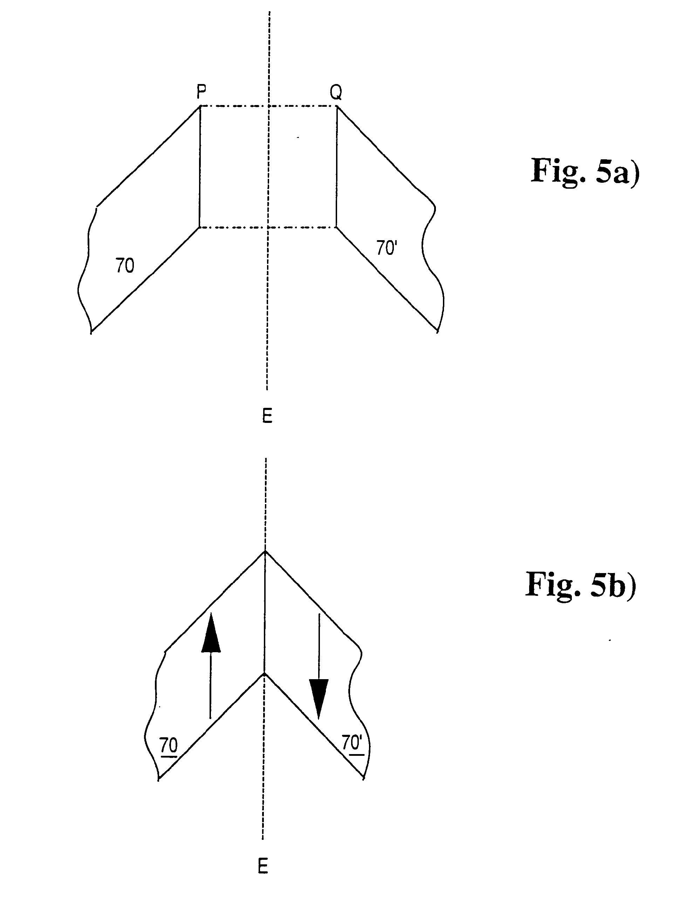

Fig. 5 a) und b) veranschaulichen einen Fügevorgang nochmals in einer Draufsicht (Blickrichtung in Fig. 4 in y-Richtung liegend) auf die miteinander unter einem Gehrungsschnitt von 45° rechtwinklig miteinander zu verschweißenden Profilrahmenabschnitte 70, 70'.

Beim paßgenauen Zusammenfügen der Profilrahmenabschnitte werden also die korrespondierenden Punkte P, Q in den Profilendquerschnitten jeweils zur Deckung gebracht.

Um nun die derart paßgenau aneinander angefügten Profilrahmenabschnitte aber tatsächlich miteinander zu verschweißen, ist Schwingungsenergie durch die Reibschweißköpfe 44 (Fig. 4) so einzuleiten, daß die im Ruhezustand paßgenau aufeinander ausgerichteten korrespondierenden (Massen)-Punkte P, Q aneinander reiben. Dies kann im Prinzip durch eine beliebige Relativbewegung der sich an der Fügeebene gegenüberliegenden Punkte P und Q erfolgen.

In der Praxis werden bevorzugterweise mit hohen Drehzahlen rotierende Antriebswellen zum Erzeugen der Anregungsschwingungen der Reibschweißplatten 46 verwendet. Dabei ist das Problem von dynamischen Unwuchten zu beachten.

DE 199 38 099 A1 diskutiert verschiedene Spezialfälle einer linearen Bewegung von Profilendquerschnittsflächen relativ zur Fügeebene E, nämlich der Art, daß entweder eine Profilendquerschnittsfläche durch geeignete Mittel wie z.B. mechanische Klammern fixiert wird, während die andere Profilendquerschnittsfläche relativ dazu in lineare Schwingungen relativ zur sogenannten Rahmenebene (d.h. in y-Richtung in Fig. 4) versetzt wird, oder aber daß beide Profilendquerschnittsflächen gegenphasig zueinander in linearer Richtung zur Rahmenebene schwingen.

DE 199 38 100 A1 diskutiert den Spezialfall, daß die Profilendquerschnittsflächen jeweils eine gegenphasige Orbitalschwingung (ellipsenförmige Bahnkurve) oder eine gegenphasige Zirkularschwingung (kreisförmige Bahnkurve) relativ zur Fügeebene ausführen.

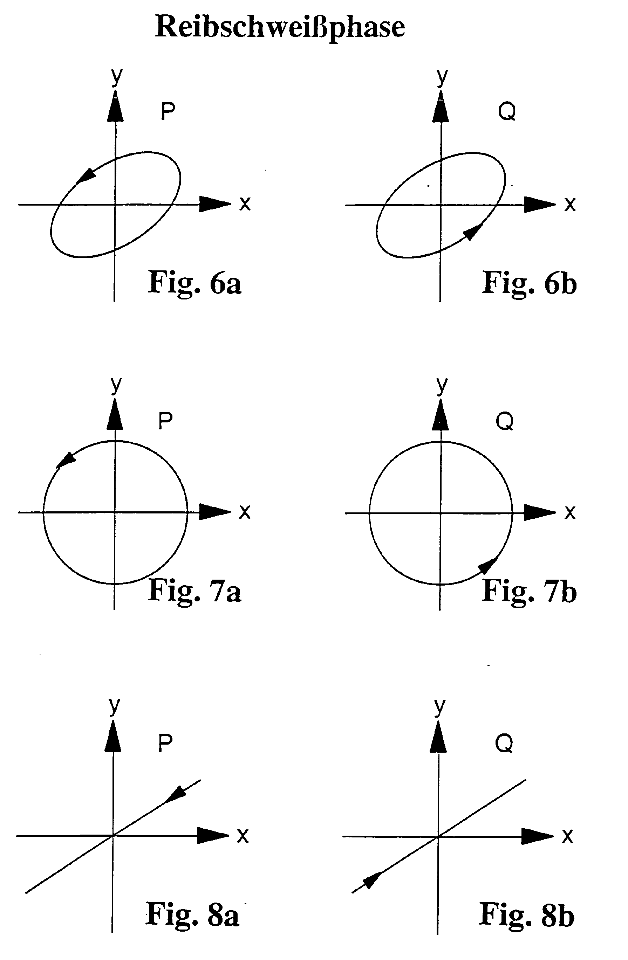

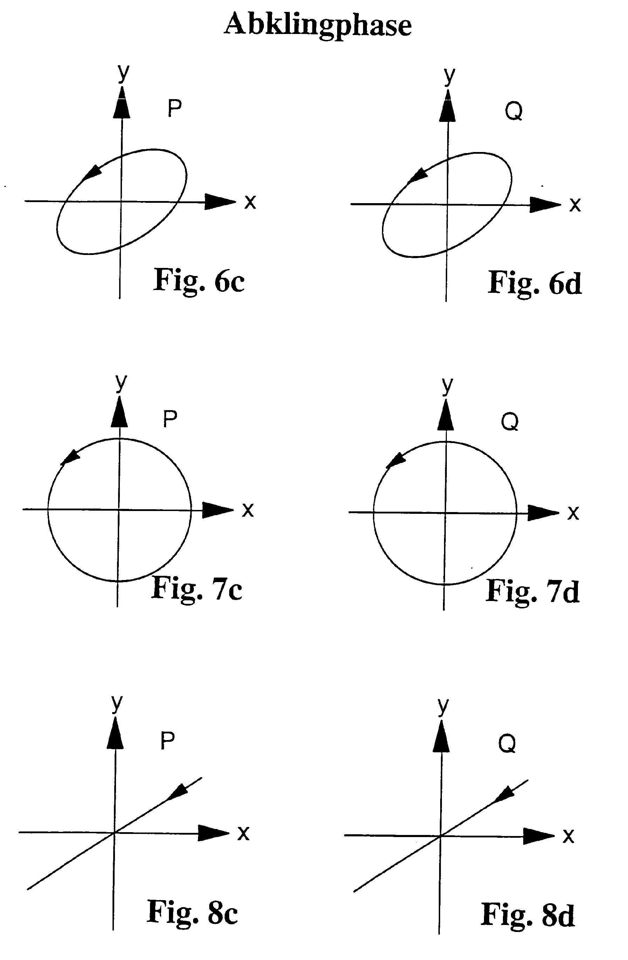

Diese Fälle lassen sich mit Hinblick auf die Fig. 6 bis 8 wie folgt verallgemeinernd zusammenfassen:

Ein Punkt P auf dem Profilrahmenabschnitt 70 (Fig. 4 und 5) wird durch den ihm zugeordneten Reibschwingkopf 44 so in Schwingungen versetzt, daß seine Bahnkurve in der Fügeebene E in einem lokalen rechtwinkligen Koordinatensystem (mit Ursprung im Projektionspunkt von P in der Fügeebene E) wie folgt durch einen harmonischen Schwingungsansatz beschrieben werden kann:

$$x_P = A_P \cdot \cos\omega t \tag{1}$$

$$y_P = B_P \cdot \cos(\omega t - \delta) \tag{2}$$

Dabei bedeuten:

$x_P$ die Auslenkung von der Ruhelage in x-Richtung;

$y_P$ die Auslenkung von der Ruhelage in y-Richtung;

$A_P$ die Amplitude der Auslenkung in x-Richtung;

$B_P$ die Amplitude der Auslenkung in y-Richtung;

$\omega$ die gemeinsame Kreisfrequenz der Schwingungen in beide Richtungen;

t die Zeit;

δ die Phasenverschiebung zwischen den Schwingungen in x- und y-Richtung.

Bei diesem Ansatz werden nur Transversalschwingungen in der Fügeebene E betrachtet; Longitudinalschwingungen in z-Richtung bleiben unberücksichtigt.

Im allgemeinen Fall beschreiben die Gleichungen (1) und (2) die Bahnparameter einer mit ihren Hauptachsen schief im lokalen x-, y-Koordinatensystem liegenden Ellipse (Fig. 6a).

Bei bauartgleichen Reibschweißköpfen 44 auf beiden Seiten der Fügeebene in Fig. 4 wird zweckmäßigerweise eine gleichgerichtete, aber um 180° Bewegung zwischen den Punkten P und Q an der Fügeebene E gewählt, um eine maximale Reibung zur Aufweichung des zu verschweißenden Materials zu erzielen.

Dann muß sich, wie in Fig. 6b) gezeigt, der Punkt Q auf dem Profilrahmenabschnitt 70' gegenläufig zum Punkt P auf dem Profilrahmenabschnitt 70 bewegen. Dies ist der Fall einer sogenannten Orbitalschwingung.

Für den Fall daß, $A_P = B_P$ und δ=90° ergibt sich eine Kreisbahn (Fig. 7a) für den Punkt P. Läuft der Punkt Q auf der in Fig. 7b) gezeigten gegenläufigen Kreiskurve, so ergibt sich der Fall einer sogenannten Zirkularschwingung.

Für den Fall, daß δ=0° ergibt sich der Fall einer im lokalen x-, y-Koordinatensystem im allgemeinen schiefliegenden Geraden als Bahnkurve (Fig. 8a). Läuft der Punkt Q (Fig. 8b) gegenläufig dazu, so ergibt dies den Fall einer Linearschwingung .

Sind die Amplituden der Schwingungen des Punktes Q in x-Richtung und y-Richtung gleich groß wie die Amplituden der Schwingungen des Punktes P, so erfolgt beim Verschweißen im Bereich der Fügeebene E an den aneinanderstoßenden Fügeflächen eine gewünschte Kräfte- und Drehmomentenkompensation.

Grundsätzlich muß der Phasenversatz zur Erzielung von Reibung zwischen den beiderseits der Fügebebene zu einander korrespondierenden Punkten P und Q bei der Bewegung auf der gemeinsamen Bahnkurve nicht 180° betragen. Eine für eine Reibung zwischen den Massenpunkten P und Q notwendige Relativbewegung findet auch dann statt, wenn der Phasenversatz beliebig größer als 0° bis einschließlich 180° ist.

Hat man bei der Ausführung der vorstehend erläuterten gegenphasigen Schwingungsmuster von jeweils korrespondierenden Punkten P, Q auf den Profilendquerschnittsflächen in der Fügeebene E Reibungswärme erzeugt und damit ein Aufschmelzen des Materials an den aneinanderreibenden korrespodierenden Punkten erreicht, so ist nunmehr eine möglichst innige und paßgenaue Verschweißung der aneinanderstoßenden Grenzflächen gewünscht.

Dazu sind zunächst die Massenpunkte P und Q zur Deckung zu bringen.

Unterbricht man die Zuleitung von Schwingungsenergie durch die Reibschweißköpfe 44 und überläßt die Massenpunkte P, Q sich selbst, so werden diese durch lokale Reibungskräfte, die in der Regel auf beiden Seiten der Fügeebene aufgrund von Materialinhomogenitäten unterschiedlich sind, unkontrolliert und unabhängig voneinander in eine Ruhelage "trudeln". Durch diese über das Abschalten der Reibsschweißköpfe hinaus stattfindende Relativbewegung der beiden Profilendquerschnitte zueinander findet also noch eine gewisse eine Fortführung des Reibschweißvorgangs statt.

Wie bereits oben ausgeführt, hat sich in der Praxis gezeigt, daß es dadurch zu einer Verschlechterung der Qualität der Reibschweißflächen kommen kann und Schwankungen in der Serienfertigung auftreten.

Um dies zu verhindern werden die Reibschweißköpfe erfindungsgemäß nach einer für das Zustandekommen einer Reibschweißverbindung notwendigen Zeitspanne ("Reibschweißphase") nicht ausgeschaltet, sondern es findet während einer kontrollierten Abklingphase eine gleichphasige Bewegung der zueinander korrespondierenden Massenpunkte P und Q auf den aneinander zu fügenden Formteilen statt.

Dazu wird der Massenpunkt Q erfindungsgemäß kurzzeitig relativ zum Massenpunkt P so beschleunigt, daß er im Zustand der Bewegung paßgenau auf diesen ausgerichtet wird und dann im weiteren immerfort phasengleich mit diesem weiterschwingt.

Erfindungsgemäß findet somit während einer kontrollierten Abklingphase keinerlei Relativbewegung zwischen den Massenpunkten P und Q statt. Durch kontinuierliches Verkleinern der Teilschwingungsamplituden A, B lassen sich die schwingenden Profilendquerschnitte der an der Fügeebene E aneinanderstoßenden Formteile in der Abklingphase synchronisiert in einen Ruhezustand abbremsen. Dabei wird die Fügefestigkeit in der Fügefläche E erheblich verbessert und in der Serienfertigung werden Schwankungen der Fügefestigkeit zwischen einzelnen Fertigteilen deutlich reduziert.

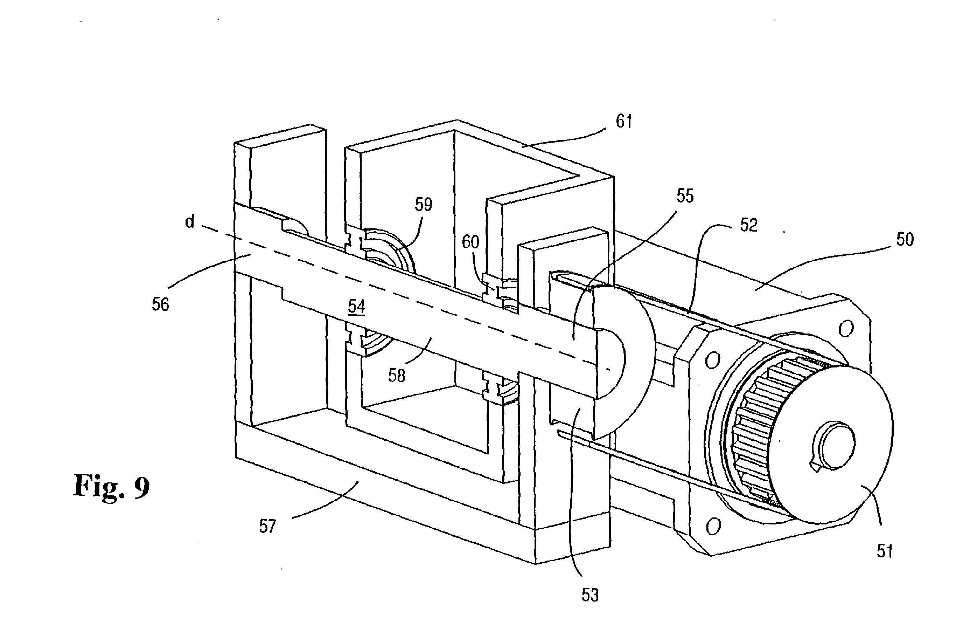

Eine in einer Vorrichtung zur Durchführung einer Ausführungsform eines erfindungsgemäßen Verfahrens vorgesehene Antriebseinheit für eine Reibschweißplatte 46 ist in einer Schnittdarstellung in Fig. 9 gezeigt.

Ein Antriebsmotor 50 treibt über ein erstes Zahnrad 51 einen Zahnriemen 52 an. Dieser greift wiederum in ein zweites Zahnrad 53 ein und treibt dieses an. Das zweite Zahnrad 53 sitzt auf einer Exzenterwelle 54. Diese Exzenterwelle 54 weist an ihren Enden zwei längs einer gemeinsamen Drehachse gefluchtete, zylinderförmige Endabschnitte 55, 56 auf, auf denen die Exzenterwelle 54 in einem relativ zu der in Fig. 4 gezeigten Basisplatte stationär fixierten Gehäuse 57 gelagert ist. Der mittige Abschnitt 58 der Exzenterwelle 54 ist relativ zu den Endabschnitten 55, 56 axial (exzentrisch) versetzt. Mittels elastischen Lagerelementen 59, 60 ist ein Schwingelement 61 auf dem mittigen Abschnitt 58 gelagert.

Durch die Drehbewegung der Exzenterwelle 58 wird der mittige Abschnitt 58 der Exzenterwelle 54 in eine exzentrische Drehung um die Drehachse d versetzt, welche mittig durch die beiden Endabschnitte 55, 56 der Exzenterwelle verläuft. Über die elastischen Lagerelemente 59, 60 wird die exzentrische Drehung des mittigen Abschnitts der Exzenterwelle 54 auf das Schwingelement 61 übertragen, welches dadurch in Vibrationen versetzt wird.

Werden bei der in Fig. 4 gezeigten Reibsschweißeinheit 30" die beiden Reibschweißköpfe 44 in der in Fig. 9 gezeigten Weise aufgebaut und die Schwingelemente 61 jeweils mit den in Fig. 4 gezeigten Reibschweißplatten 46 gekoppelt, so führen die Reibschweißplatten 46 eine Kreisbewegung relativ zu der in Fig. 4 gezeigten Fügeebene E aus.

Durch Abstimmung der Drehrichtung und Phasenlage zweier Exzenterwellen in einer in Fig. 4 gezeigten Anordnung beschreiben gegenüberliegende Punkte auf den Reibschweißplatten 46 dann die in Fig. 7a) bis 7d) gezeigten Bahnkurven.

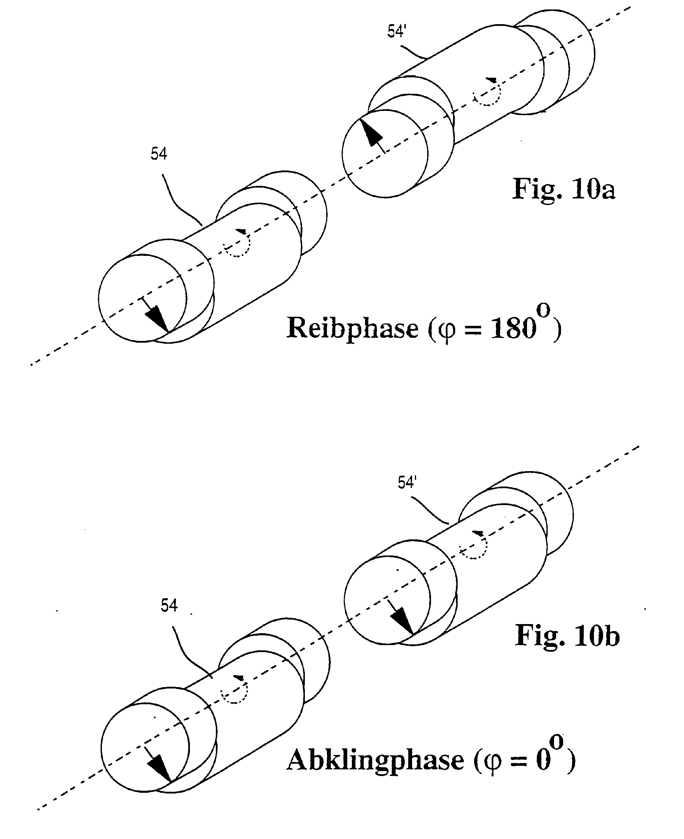

Fig. 10a) zeigt in schematischer Darstellung die räumliche Anordnung zweier solcher Exzenterwellen in einer in Fig. 4 gezeigten Reibschweißeinheit. Dabei laufen die Exzenterwellen bei diesem Ausführungsbeispiel während der Reibschweißphase gleichsinnig gegen den Uhrzeigersinn und sind um exakt 180° zueinander phasenverschoben. Lezteres kann dadurch erreicht werden, daß man eine jeweils auf der Stirnfläche einer Exzenterwelle 54, 54' angebrachte Positionsmarke (Pfeil) in gewünschter Orientierung vor dem Start der Exzenterwellen ausrichtet und die beiden Exzenterwellen dann durch eine Überwachungssteuerung exakt gleich auf die gewünschten Drehzahlen hoch beschleunigt.

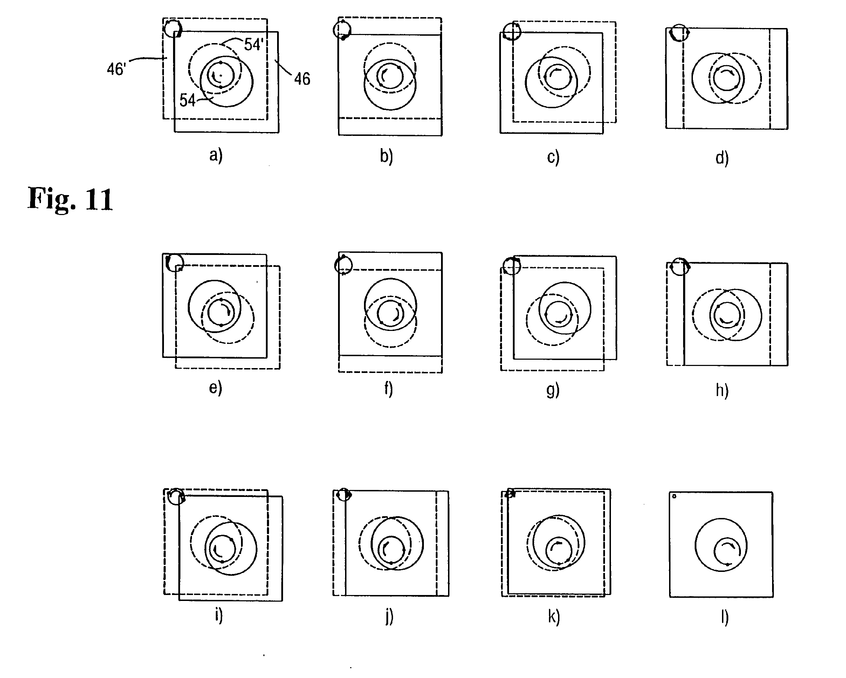

Fig. 11a) bis 11k) veranschaulicht in schematischer Darstellung eine Sequenz von Relativpositionen zweier derart von Exzenterwellen 54, 54' angetriebener Reibschweißplatten 46, 46', die während einer Reibschweißphase gleichläufig aber mit einer Phasenverschiebung von 180° im den Uhrzeigersinn bewegt werden.

Die von den Reibschweißplatten durchlaufenen Bahnkurven können dann auf Formteile übertragen werden, an die die Reibschweißplatten angepreßt werden.

Fig. 10b) zeigt die beiden in Fig. 10a) gezeigten Exzenterwellen während der einer Reibschweißphase erfindungsgemäß folgenden Abklingphase. Dabei sind beiden Exzenterwellen phasengleich ausgerichtet, wie man anhand der an den Stirnflächen angebrachten Pfeile erkennt. Diese phasengleiche Ausrichtung erfolgt unmittelbar nach der Reibschweißphase, wenn sich die beiden Exzenterwellen mit einer Drehzahl von typischerweise einigen tausend Umdrehungen pro Minute drehen. Dies wird dadurch erreicht, daß die Bewegungsabläufe der Antriebsmotoren 50 der in Fig. 9 bzw. 4 gezeigten Reibschweißeinheiten jeweils von einer gemeinsamen Überwachungssteuerung überwacht und geregelt werden. Durch kurzzeitig einwirkende Steuerimpulse können die gemäß der in Fig. 10a) gezeigten Anordnung um 180° zueinander phasenverschoben aber gleichsinnig laufenden Exzenterwellen relativ zueinander kurzfristig beschleunigt oder abgebremst werden, bis sich die in Fig. 10b) gezeigte Phasenlage der immer noch mit praktisch unveränderter Drehzahl rotierenden Exzenterwellen einstellt. Aus diesem Zustand werden die beiden Exzenterwellen gemeinsam in permanent gleichphasigem Zustand in den Ruhezustand abgebremst.

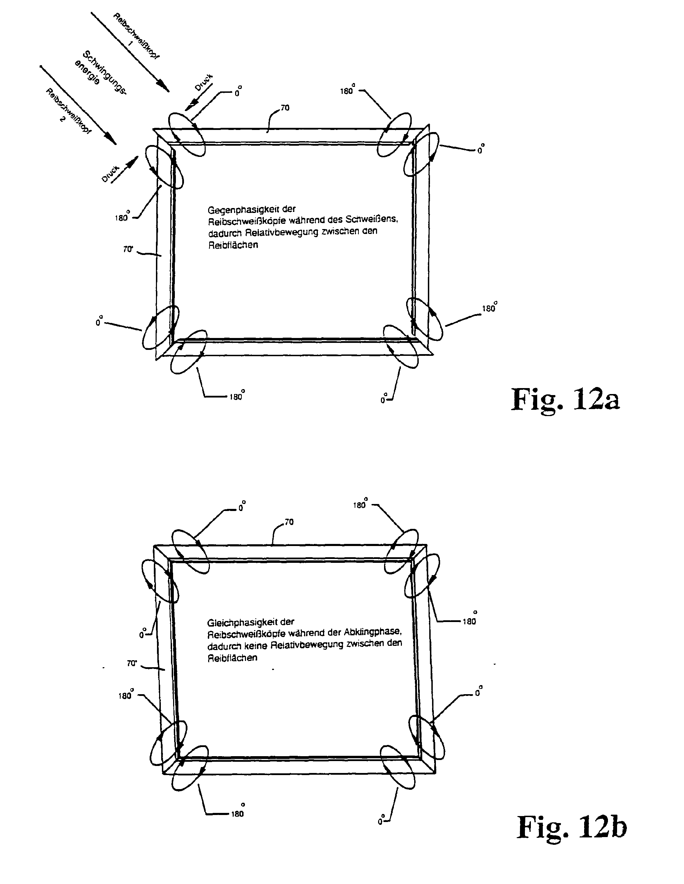

Für eine in Fig. 3 und 4 gezeigte Vorrichtung zur Durchführung mehrerer gleichzeitiger Reibschweißvorgänge an den Eckpunkten eines aus einem Zug von mehreren Profilrahmenabschnitten zu fertigenden rechteckigen Rahmens wird bevorzugterweise das in Fig. 12a) und 12b) gezeigte Schema der Beaufschlagung mit Orbital- bzw. Zirkularschwingungen während des Reibschweißvorgangs und während der Abklingphase gewählt:

Fig. 12a) zeigt das aus dem Stand der Technik bekannte Schema von paarweise gegenläufigen Phasenversätzen an jeder Fügeebene während der Reibschweißphase. An jeder Fügeebene trifft ein orbital (zirkular) schwingender Profilendquerschnitt eines Profilrahmenabschnitts auf einen gleichläufig aber um 180° phasenversetzt dazu orbital (zirkular) schwingenden Profilendquerschnitt eines anstoßenden Profilrahmenabschnitts. Die beiden Enden ein und desselben Profilrahmenabschnitts schwingen ebenfalls gleichläufig aber gegenphasig in einer Orbitalschwingung. Beginnt man den Rahmen beim oberen linken Eckpunkt bei der Orbitalschwingung des linken Endes des oberen Profilrahmens 1 gegen den Uhrzeigersinn zu durchlaufen, so ist die Sequenz der aufeinanderfolgenden Phasenverschiebungen, die durchlaufen werden, bis man wieder am Ausgangspunkt zurück ist:

0° - -180° -0° - -180° -0° - -180° -0° - -180°.

(In dieser Notation veranschaulichen zwei Trennstriche "- -" den Übergang an einer Fügeebene von einem ersten Profilrahmen zu einem daran anstoßenden Profilrahmen; ein Trennstrich "-" veranschaulicht den Übergang von einem Profilendquerschnitt eines Profilrahmenabschnitts zum gegenüberliegenden Profilendquerschnitt an demselben Profilrahmenabschnitt).

Fig. 12b) zeigt das erfindungsgemäße Schema von paarweise gleichgroßen Phasenversätzen während der Abklingphase nach Beendigung der Reibschweißphase. An jeder Fügeebene trifft ein orbital schwingender Profilendquerschnitt eines Profilrahmenabschnitts auf einen gleichläufig und gleichphasig orbital schwingenden Profilendquerschnitt eines anstoßenden Profilrahmenabschnitts. Die beiden Enden ein und desselben Profilrahmenabschnitts schwingen dabei gleichläufig und gegenphasig. Beginnt man den Rahmen beim oberen linken Eckpunkt bei der Orbitalschwingung des linken Endes des oberen Profilrahmens 1 gegen den Uhrzeigersinn zu durchlaufen, so ist die Sequenz der aufeinanderfolgenden Phasenverschiebungen, die durchlaufen werden, bis man wieder am Ausgangspunkt zurück ist:

0° - -0° - 180° - - 180° - 0° - - 0° - 180° - - 180°.

Wie aus Fig. 12b) ersichtlich kompensiert sich auch bei diesem Beaufschlagungsschema mit paarweise an einer Fügeebene gleichphasigen und paarweise innerhalb eines Profilrahmenabschnitts an dessen gegenüberliegenden Enden gegenphasigen Schwingungsbewegungen die Gesamtsumme der angreifenden Kräfte und Drehmomente.

Damit ist auch während des Abklingsvorgangs gewährleistet, daß der mechanische Aufbau zur Halterung der Reibschweißvorrichtungen und der darin zu verschweißenden Profilrahmenabschnitte einer möglichst geringen mechanischen Belastung und damit möglichst wenig Verschleiß unterliegt.

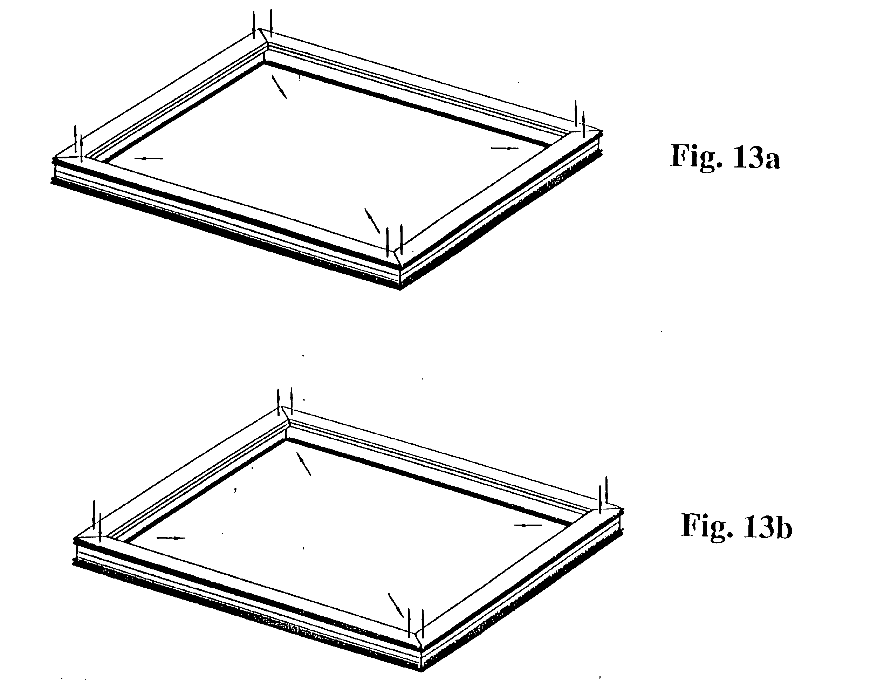

Fig. 13a) und b) zeigen eine Möglichkeit eines komplexen Schwingungsschema eines mit einem erfindungsgemäßen Verfahren hergestellten Rahmens während der Abklingphase

Durch die zusätzliche Beaufschlagung von in z-Richtung senkrecht zur Fügeebene E laufenden Kräften kann eine möglichst innige Verpressung der durch die Erwärmung erweichten Profilrahmenendquerschnitte erzielt werden.

In dem in Fig. 13a gezeigten Zustand führen diagonal gegenüberliegende Eckbereiche jeweils eine gleichgerichtete Bewegung nach oben oder unter aus, längs eines Kante benachbart liegende Eckbereiche führen eine zueinander entgegengesetzte Bewegung aus. In Fig. 13 b die entsprechend umgekehrte Rückschwingung gezeigt. Gleichzeitig führt der Rahmen längs einer Diagoanlen in Fig. 13a eine Stauchbewegung aus, längs der zweiten Diagonalen eine Streckbewegung. In Fig. 13b ist die Umkehrung von Stauch- und Streckbewegung gezeigt.

Bezugszeichenliste

| | |
|---|---|
| 1, 2 | untere Führungsschienen |
| 3,4 | obere Führungsschienen |
| 5, 6 | Führungsstege auf den unteren Führungsschienen |
| 30, 30' , 30", 30''' | Reibschweißeinheiten |
| 31, 31', 31", 31''' | Basisplatten |
| 32, 42 | Führungsstege auf den oberen Führungsschienen |
| 70, 70' , 70", 70''' | Profilrahmenabschnitte |
| 44 | Reibschweißköpfe |
| 46 | Reibschweißplatten |
| 48 | Basisplatten |
| 50 | Antriebsmotor |
| 51 | erstes Zahnrad |
| 52 | Zahnriemen |
| 53 | zweites Zahnrad |
| 54, 54' | Exzenterwellen |
| 55, 56 | Endabschnitte der Exzenterwelle |
| 57 | stationär fixiertes Gehäuse |
| 58 | mittiger Abschnitt |
| 59, 60 | elastische Lagerelemente |

61          Schwingelement

x, y, z     Achsen im lokalen rechtwinkligen Koordinatensystem in der Fügeebene

E           Fügeebene

P, Q        an den Fügeflächen benachbarter Profilrahmenabschnitte paßgenau zur Deckung zu bringende (Massen) -Punkte

$A_P$       Schwingungsamplitude von P in x-Richtung

$B_P$       Schwingungsamplitude von P in y-Richtung

$\omega$    Kreisfrequenz der Schwingungen

$\delta$    Phasenversatz zwischen den Schwingungskomponenten in x- und in y-Richtung

**Patentansprüche**

1.  Reibschweißverfahren zum Verschweißen von Fügeflächen zweier Formteile, wobei während einer ersten Zeitdauer (Reibschweißphase), die der Erwärmung von an einer Fügeebene aneinanderstoßenden Fügeflächen der Formteile dient, die Fügeflächen durch mit Phasenversatz zueinander erfolgende Relativbewegungen mit hoher Geschwindigkeit aneinander gerieben werden,
    **dadurch gekennzeichnet,**
    **daß** während einer der Reibschweißphase folgenden Abklingphase die Formteile durch Phasenanpassung von Relativbewegungen ihrer Fügeflächen in der Fügeebene paßgenau zueinander ausgerichtet werden und ohne weitere Relativbewegung in der Fügeebene zueinander in dieser passgenauen Ausrichtung gemeinsam zum Stillstand gebracht werden.

2.  Reibschweißverfahren nach Anspruch 1, wobei jeder Massenpunkt (P) an der Fügefläche des ersten Formteils während der Reibschweißphase auf eine Bahnkurve in der Fügeebene gebracht wird, die durch den Ansatz

$$x_P = A_P \cdot \cos\omega t \tag{1}$$

$$y_P = B_P \cdot \cos(\omega t - \delta) \tag{2}$$

in einem in der Fügeebene liegenden rechtwinkligen x-, y-Koordinatensystem beschrieben werden kann, mit
$x_P$ : Auslenkung von P aus der Ruhelage in x-Richtung;
$y_P$ :Auslenkung von P aus der Ruhelage in y-Richtung;
$A_P$ :Amplitude der Auslenkung in x-Richtung;
$B_P$: Amplitude der Auslenkung in y-Richtung;
$\omega$ : gemeinsame Kreisfrequenz der Schwingungen in beide Richtungen;
$t$ : Zeit;
$\delta$: Phasenverschiebung zwischen den Schwingungen in x- und y-Richtung;
und ein mit einem Massenpunkt P korrespondierender und letztlich mit diesem zu verschweißender Massenpunkt Q auf der Fügefläche des zweiten Formteils während der Reibschweißphase phasenversetzt aber gleichläufig auf derselben Bahnkurve wie der Massenpunkt P läuft,
wobei nach Abschluß der Reibschweißphase korrespondierende Massenpunkte P und Q beiderseits der Fügeebene auf der gemeinsamen Bahnkurve zur Deckung gebracht werden,
und während einer Abklingphase korrespondierende Massenpunkte P und Q beiderseits der Fügeebene in Deckung zur Ruhe gebracht werden.

3.  Reibschweißverfahren nach Anspruch 1 oder 2,
    **dadurch gekennzeichnet,**

**daß** die aneinanderstoßenden Formteile Profilrahmenabschnitte sind, die in einer Gehrungsschnittebene als Fügeebene miteinander zu verschweißen sind.

4. Reibschweißverfahren nach Anspuch 3, **dadurch gekennzeichnet, daß** die Profilrahmenabschnitte einen in einer Rahmenbezugsebene plan verlaufenden und in sich geschlossen rechteckförmigen Zug von Profilabschnitten bilden,
wobei in jeder Ecke eine senkrecht zur Rahmenbezugsebene verlaufende Fügeebene (E) von je zwei aneinanderstoßenden Profilrahmenabschnitten (70, 70') gebildet ist,
und wobei während der Reibschweißphase die an einer Fügeebene (E) aneinanderstoßenden Profilrahmenendquerschnitte (Fügeflächen) benachbarter Profilrahmenabschnitte mit phasenversetzten Schwingungskomponenten beaufschlagt werden,
während die beiden beabstandet voneinanderliegenden Profilrahmenendquerschnitte ein und desselben Profilrahmenabschnitts mit gleichphasigen Schwingungskomponenten beaufschlagt werden,
wohingegen während einer auf die Reibschweißphase folgenden Abklingphase die an einer Fügeebene (E) aneinanderstoßenden Profilrahmenendquerschnitte (Fügeflächen) benachbarter Profilrahmenabschnitte mit gleichphasigen Teilschwingungen beaufschlagt und zur Ruhe gebracht werden, während jeweils die beiden Profilrahmenendquerschnitte ein und desselben Profilrahmenabschnitts mit gegenphasigen Teilschwingungskomponenten beaufschlagt werden.

5. Vorrichtung zur Durchführung eines Verfahrens nach einem der Ansprüche 1 bis 4,
**dadurch gekennzeichnet,**
**daß** die Vorrichtung mindestens ein Paar von zwei längs einer gemeinsamen Drehachse ausgerichteten drehbaren Exzenterwellen umfasst, deren Phasenlage zueinander bei Drehung in einer gemeinsamen Drehrichtung um die Drehachse steuerbar ist,
**daß** jede Exzenterwelle mit einer zugeordneten Reibschweißplatte versehen ist, auf die die Drehung der zugeordneten Exzenterwelle übertragbar ist, und
**daß** die beiden Reibschweißplatten an einander benachbart liegenden Stirnseiten der Exzenterwellen so angeordnet sind, dass zwischen den Reibschweißplatten zwei zu verschweißende Formteile eingebracht werden können, auf die jeweils die Drehbewegung einer Exzenterwelle über die jeweils zugeordnete Reibschweißplatte übertragbar ist.

**Fig. 1**

**Fig. 2**

**Fig. 3**

**Fig. 4**

Fig. 5a)

Fig. 5b)

# Reibschweißphase

Fig. 6a

Fig. 6b

Fig. 7a

Fig. 7b

Fig. 8a

Fig. 8b

# Abklingphase

Fig. 6c

Fig. 6d

Fig. 7c

Fig. 7d

Fig. 8c

Fig. 8d

18

Fig. 9

EP 1 447 167 A1

54'

54

## Fig. 10a

**Reibphase** ($\varphi = 180^{o}$)

54'

54

## Fig. 10b

**Abklingphase** ($\varphi = 0^{o}$)

Fig. 11

Reibschweißkopf 1

Schwingungs-energie

Reibschweißkopf 2

Druck

Druck

0°

180°

0°

180°

70

180°

70°

Gegenphasigkeit der Reibschweißköpfe während des Schweißens, dadurch Relativbewegung zwischen den Reibflächen

0°

180°

180°

0°

**Fig. 12a**

0°

180°

0°

180°

70

70°

Gleichphasigkeit der Reibschweißköpfe während der Abklingphase, dadurch keine Relativbewegung zwischen den Reibflächen

180°

0°

180°

0°

**Fig. 12b**

Fig. 13a

Fig. 13b

**Europäisches Patentamt**

## EUROPÄISCHER RECHERCHENBERICHT

Nummer der Anmeldung

EP 04 00 3202

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | GB 1 481 215 A (CLARKE CHAPMAN LTD) 27. Juli 1977 (1977-07-27) * Seite 1, Zeilen 20-74 * | 1,2 | B23K20/12 B29C65/06 |
| Y | * Seite 2, Zeile 13 - Seite 3, Zeile 25; Abbildungen 1a-d,3a-d * ----- | 3-5 | |
| X | US 5 248 077 A (L.J. RHOADES ET AL) 28. September 1993 (1993-09-28) | 1 | |
| A | * Spalte 11, Zeilen 10-25; Abbildung 7 * ----- | 5 | |
| X | CH 540 087 A (STEIGERWALD KARL HEINZ) 15. August 1973 (1973-08-15) * Spalte 3, Zeile 36 - Spalte 5, Zeile 32 * * Spalte 7, Zeile 22 - Spalte 9, Zeile 39; Abbildungen 1,2,4 * ----- | 1 | |
| X | GB 1 324 431 A (CLARKE CHAPMAN JOHN THOMPSON L) 25. Juli 1973 (1973-07-25) * Seite 1, Zeilen 46-54 * * Seite 2, Zeile 106 - Seite 3, Zeile 112; Abbildung 1 * ----- | 1,2 | RECHERCHIERTE SACHGEBIETE (Int.Cl.7) |
| Y,D | DE 199 38 100 A (EXAMA MASCHINEN GMBH) 15. Februar 2001 (2001-02-15) * das ganze Dokument * ----- | 3-5 | B23K B29C |

Der vorliegende Recherchenbericht wurde für alle Patentansprüche erstellt

| Recherchenort | Abschlußdatum der Recherche | Prüfer |
|---|---|---|
| München | 14. Mai 2004 | Jeggy, T |

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 04 00 3202

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-05-2004

| Im Recherchenbericht angeführtes Patentdokument | Datum der Veröffentlichung | Mitglied(er) der Patentfamilie | Datum der Veröffentlichung |
|---|---|---|---|
| GB 1481215 A | 27-07-1977 | KEINE | |
| US 5248077 A | 28-09-1993 | KEINE | |
| CH 540087 A | 15-08-1973 | KEINE | |
| GB 1324431 A | 25-07-1973 | KEINE | |
| DE 19938100 A | 15-02-2001 | DE 19938100 A1<br>AT 246992 T<br>BR 0013263 A<br>CA 2381529 A1<br>CN 1370109 T<br>CZ 20020400 A3<br>DE 50003300 D1<br>DK 1207994 T3<br>WO 0112420 A1<br>EP 1207994 A1<br>HU 0202402 A2<br>JP 2003507210 T<br>PT 1207994 T<br>TR 200200342 T2<br>US 2002070259 A1 | 15-02-2001<br>15-08-2003<br>16-04-2002<br>22-02-2001<br>18-09-2002<br>12-06-2002<br>18-09-2003<br>01-12-2003<br>22-02-2001<br>29-05-2002<br>28-11-2002<br>25-02-2003<br>31-12-2003<br>21-06-2002<br>13-06-2002 |

EPO FORM P0461

Für nähere Einzelheiten zu diesem Anhang : siehe Amtsblatt des Europäischen Patentamts, Nr.12/82